# EUROPEAN PATENT APPLICATION

(11) **EP 4 178 054 A1**
(43) Date of publication of application: **10.05.2023**
(21) Application number: 21206325.9
(22) Date of filing: 03.11.2021
(51) Int. Cl.: H02G 13/00

(54) **LIGHTNING PROTECTION DEVICE WITH CURRENT METER, DIAGNOSTIC METHOD FOR SAID DEVICE AND METHOD FOR PROTECTING EQUIPMENT AGAINST LIGHTNING**

(71) Applicant: Sertec, S.r.l., R56 FE04 Kilcullen, County Kildare (IE)
(72) Inventor: CHIFARELLI, Armando Francisco, 2420 LAMBARE (PY)
(74) Representative: Durán-Corretjer, S.L.P.

(57) **Abstract**

Lightning protection device, said device comprising an upper head made up of two electrodes separated by a dielectric, one of said electrodes being connected to earth via an earth cable such that a potential difference may exist between the two electrodes, wherein said device also comprises a current intensity meter configured to measure the intensity circulating through the earth cable.

## Description

The present invention discloses a lightning protection device with current meter. Also disclosed is a diagnostic method for said device and a method for protecting equipment against lightning.

The present invention also discloses a prevention method for equipment against electric discharges caused by lightning or an electric discharge.

Lightning is formed when an electric charge (said charge being negative in most storms) appears in cumulonimbus clouds. This charge is attracted by the positive charge of the earth's surface. When the electric charge is high, lightning or a descending leader may often form between the electric charge of the cumulonimbus cloud and that of the ground. In other cases, the cumulonimbus clouds have a positive electric charge, whereas the earth's surface has a negative electric charge, in which case the lightning formed is an ascending leader.

Lightning conductors that attract the formation of lightning are known. These lightning conductors, connected to the earth, seek to position a ground charge at a high altitude, so that the electric charge of the atmosphere seeks the shortest route to the positive earth charge to form the lightning flash, which in this case is the extended tip of the lightning conductor. In this way, these lightning conductors, also known as Franklin lightning conductors, allow equipment and people located within the range covered by said lightning conductor to be protected.

Lightning protection devices that act as electric and/or electromagnetic field protectors are also known. These lightning protectors, also known as electric field protectors, electromagnetic field compensators or multiple electromagnetic field compensators are passive capture systems that at all times balance and deionise the effects of atmospheric phenomena through a part of said system that acts as a capacitor.

Said electromagnetic field control devices comprise two electrodes separated by a dielectric, one of the electrodes, usually the lower electrode, being connected to ground and having the same charge as the earth. This configuration of electrodes allows the lightning conductor to attract the electric charge of the electromagnetic field of the cumulonimbus clouds through the electrode that is not connected to ground, usually the upper electrode. In these devices there is therefore a potential difference between the electrodes.

Said lightning protection device acts as a capacitor, its main function being to attract atmospheric charges within its coverage radius and constantly shunt said charges to ground, which produces small current leakages or surges through the dielectric, allowing the electromagnetic field to be discharged through small current leakages, of harmless milliamperes, and preventing the upward or downward leader (lightning flash) from forming. The operating principle is based on compensating and stabilising the electromagnetic field present in the area of protection, thus nullifying the formation of the upward leader, neutralising the lightning and draining the electric fields to earth in the form of low intensity currents, these being harmless to people and equipment. The flow of charges from the atmosphere to ground allows the equipment to prevent and/or hamper the formation of the lightning. A major advantage of this type of lightning conduction device is that it generates a shield or area of protection in its coverage area.

The electromagnetic field compensator carries out a continuous drainage process under its coverage radius, and the time when the greatest drainage is carried out is when the field is charged and this occurs when black clouds are present (moments before, during and after an electric storm).

The main difference from conventional lightning conductors is that said conventional lightning conductors attract the lightning so that the upward or downward leader is created between the cumulonimbus cloud and the tip of the lightning conductor. Electromagnetic field control devices have the advantageous effect of not stimulating or capturing the lightning, but instead act by attracting the charges in the upper electrode and gradually discharging said charges, as well as reducing the electrical risks resulting from a lightning strike by preventing such a strike from happening in the first place. Moreover, said devices do not generate electromagnetic compatibility effects. Said devices allow any type of structure or environment with a fire or explosion risk to be protected.

Electromagnetic field compensation devices have the drawback that said devices might be damaged. It is therefore advantageous to know at all times whether or not a device is operating correctly to ensure that the protection offered by said devices is adequate or not. For example, if said device is not operating correctly, it is possible that current may not pass through a down inductor of said lightning protector, meaning that the equipment would have to be repaired, or that the current that passes through is greater than a threshold intensity, which would imply that the dielectric is not operating correctly and should be changed. One option for checking whether or not said device is operating is to measure the leakage currents present.

The meters used for conventional Franklin lightning conductors are designed to measure how many times lightning strikes and the power of the lightning flash or flashes that were discharged. Said meters are useful in Franklin lightning conductor devices as in this case a lightning strike is expected as said devices encourage the formation of said lightning.

However, said meters are not useful for electromagnetic field compensation devices as the operation of said devices is based on preventing the formation of lightning by the controlled discharge of the electric charge of the atmosphere, and therefore with a meter that measures the power of lightning that has already struck it would not be possible to ascertain if the lightning protector is or is not operating correctly. In the sector dedicated to protection systems against electric discharges there is no device at present that is responsible for carrying out continuous measurements of the operation of the protection system that has or is capable of demonstrating the functionality of the equipment, as said equipment is mainly responsible for capturing lightning, unlike the lightning protector described above. Specifically, this type of meter would provide little data as the protector impedes the formation of said lightning, and said reading would therefore not be the most suitable.

It is therefore necessary to determine if the protection offered by compensation lightning protection devices is suitable. Moreover, it is also necessary to determine when the intensity of the storm will be such that the compensation lightning protection device will not be able to completely prevent lightning strikes in the vicinity thereof, by anticipating lightning strikes on nearby equipment not directly protected by the device. Therefore, a method for protecting equipment and infrastructure is also necessary that allows a protection alarm signal to be generated which allows an operator to take judicious action to protect the rest of the equipment.

Following investigatory work, the present application discloses that this is achieved through the contribution of current intensity measuring equipment. The measuring equipment of the present invention has the exclusive feature of operating with electromagnetic field compensators such as multiple electromagnetic field compensator, for example. The meter facilitates the continuous verification of the drainage carried out by the electromagnetic field compensators. According to the present invention, said measurement makes it possible to anticipate when the storm is of such intensity that the device will not be able to prevent lightning from striking in the vicinity thereof. Said intensity meter also makes it possible to check the operation of the multiple electromagnetic field compensator responsible for protecting against electric discharges of atmospheric origin within its coverage radius.

In preferred embodiments, the present invention discloses means for facilitating the identification display of the drainage and with those data confirming the operation of the multiple electromagnetic field compensator or determining a possible fault according to the data produced by the continuous meter. A diagnostic method is therefore required for a lightning protection device which, after measuring specific values, allows a maintenance alarm signal to be generated for the device which allows an operator to identify when maintenance should be carried out on the equipment.

In addition, the data obtained may be recorded. That is to say, the present invention also envisages facilitating the study of the data obtained. Accordingly, said invention allows a back-up to be taken of data recording the measurements with the capability of carrying out comparisons of behaviour for as long as necessary. In this way, it will be possible at all times to monitor or have readings of the drainage carried out by the multiple electromagnetic field compensator, and therefore, have a stabilised electromagnetic field according to the measurements displayed on the equipment and be able to be certain that within the coverage radius of the compensator the structures and people covered by said compensator are protected.

More specifically, the present invention discloses a lightning protection device comprising an upper head comprised of two electrodes separated by a dielectric, one of said electrodes being connected to ground via a grounding cable such that a potential difference may exist between the two electrodes, with the particular feature that said device also comprises a current intensity meter configured to measure the intensity circulating through the grounding cable.

The measuring device, or intensity meter, according to the invention is a device responsible for carrying out measurements of the continuous drainage of the electromagnetic field compensator.

Preferably, the current intensity meter is a current transformer in which one of the windings is formed by the grounding cable. More preferably, the current transformer is a toroidal transformer.

Preferably, said meter comprises data transmission means, said means being an SD card, a SIM card, Wi-Fi or Bluetooth connectivity.

Preferably, the device and/or the meter comprise data display means, said means comprising a screen, a mobile application or a web page.

Accordingly, and in addition to indicating the correct compensation of the field shunted to ground in a low current, the intensity meter may comprise means for determining parameters such as temperature, humidity, atmospheric pressure, height above sea level, distance at which an upward or downward leader formed and the approximate intensity thereof. Said intensity meter may also comprise means for transmitting data to a screen or web page. Said information will therefore be available for display, preferably via a web page created exclusively for the meter, or by a mobile telephone application.

Preferably, the at least two electrodes are an upper electrode and a lower electrode, the at least one electrode referenced to ground being the lower electrode.

Preferably, said device comprises additional spherical electrodes, said spherical electrodes being connected to the lower electrode by a dielectric element.

Preferably, said device comprises an additional electrode, said additional electrode being a planar and/or ring-shaped electrode, said electrode being connected to a mast by a dielectric element.

The present invention also discloses a method for protecting equipment or infrastructure from lightning, which comprises the steps of:
a. Arranging a lightning protection device as described above in close proximity to the equipment or infrastructure to be protected.
b. Measuring the current intensity through the grounding cable.
c. If the absolute value measured exceeds a given value, generating a protection alarm for the equipment or infrastructure.

Preferably, the protection alarm is generated once the absolute value measured exceeds a value of 1500 mA. More preferably, the protection alarm is generated once the absolute value measured exceeds a value of 2000 mA. Said values would indicate that the current is excessive. Said values are lower than those that travel through a lightning conductor when lightning passes through.

The present invention also discloses a diagnostic method for a device as described above, characterised in that it comprises the steps of:
a. Measuring the current intensity that circulates through the grounding cable.
b. If the absolute value is less than a given amount, generating a maintenance alarm for the device.

Preferably, the maintenance alarm for the device is generated if the absolute intensity value is less than a given amount for a given period. More preferably, more than one type of alarm is generated, depending on whether the absolute intensity value is less than or greater than a given amount.

For a better understanding, the accompanying drawings show an explanatory but non-limiting example of an embodiment of the present invention.
Fig. 1 is a first example of an electromagnetic field compensation lightning protection device.
Fig. 2 is a second example of an electromagnetic field compensation lightning protection device.
Fig. 3 is a diagram showing the positioning of a current intensity meter according to the present invention on an item of infrastructure.
Fig. 4 shows diagrammatically an example of the internal connection of a current intensity meter according to the present invention.
Fig. 5 shows diagrammatically an example of a graphic display of current intensity data according to the present invention.

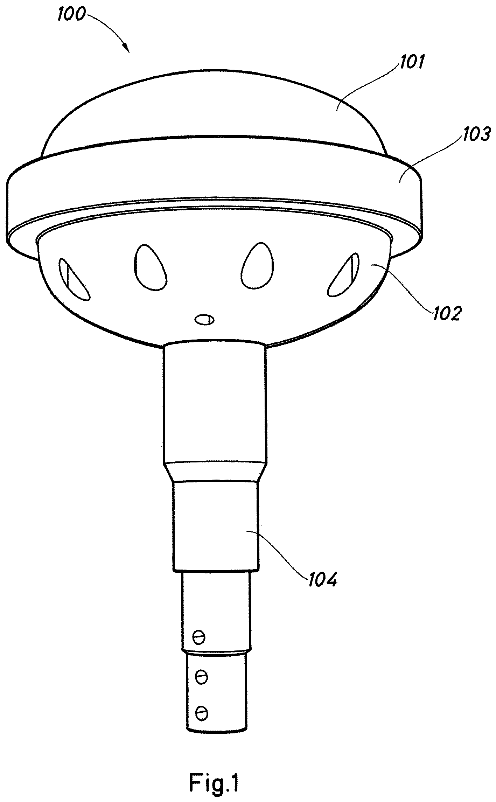

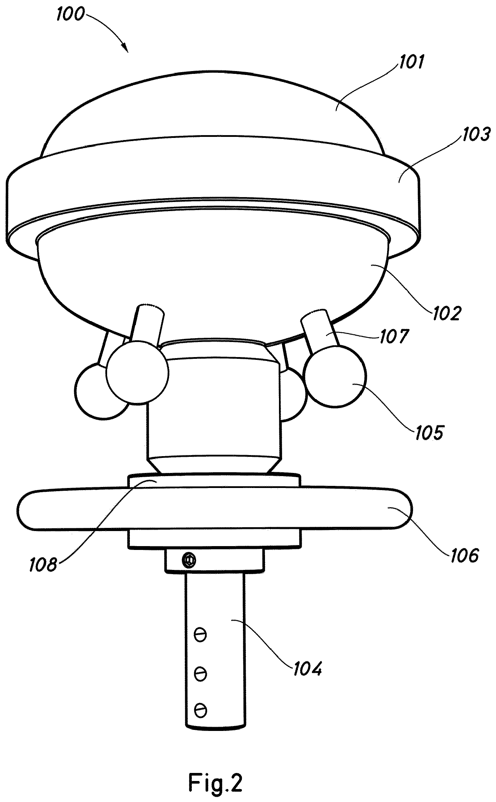

Fig. 1 and 2 both show heads of electromagnetic field compensation lightning protection devices according to the prior art.

As can be seen in Fig. 1, the electromagnetic field compensation lightning protection devices 100 comprise at least two electrodes 101, 102 separated by a dielectric 103. The figure shows an upper electrode 101 and a lower electrode 102. The lower electrode 102 has ground connection means so that a potential difference exists between the two electrodes 101, 102, said lightning conductor device 100 also comprising a mast 104 and a grounding cable. The device 100 may also comprise means for securing the electrodes, such as screws. Said potential difference generates a flow of charges towards ground through leakage currents or drainage through the dielectric.

In addition, as can be seen in Fig. 2, the electromagnetic field compensation devices 100 may comprise additional spherical electrodes 105, said spherical electrodes 105 being connected to the lower electrode 102 by a dielectric element 107, and also additional planar or ring-shaped electrodes 106, said ring-shaped electrodes 106 being connected to the mast 104 by a dielectric element 108. Said additional electrodes 105, 106 are preferably made of a consumable material.

Said additional electrodes 105, 106 also allow the lower electrode 102 connected to ground to be covered, so that if the electric charge of the atmosphere or of the cumulonimbus clouds is very high, in the event of lightning forming, a downward or upward leader would be formed between said additional electrodes 105, 106, breaking said electrodes and protecting the integrity of the electrode 102, which is more expensive and onerous to maintain and repair, while allowing the lightning conductor device 100 to operate correctly, like the device with no additional electrodes shown in Fig. 1.

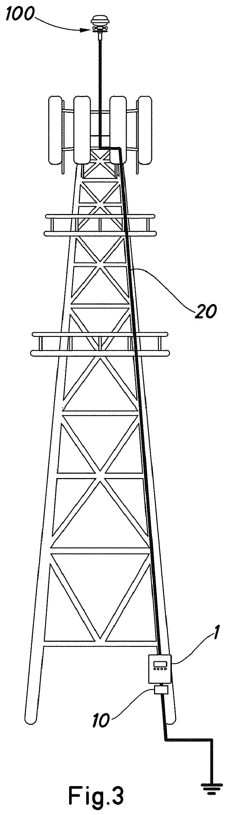

Fig. 3 shows the positioning of a current intensity meter 1 for an electromagnetic field compensation lightning protection device 100, as shown in Fig. 1 and 2. Said intensity meter 1 comprises a current measuring element which is a current transformer 10, and also data transmission means and data display means. Said transformer 10 is connected so as to be able to measure the current present in the grounding cable 20. One of the windings of the transformer 10 is formed by the grounding cable 20 of the lightning protector. It is therefore possible to display the data on the leakage current drained by the lightning protection device 100 measured using the current in the cable 20 which passes through the transformer.

The intensity meter, or drainage meter 1 will be installed on the outside, specifically on the down path of the lightning protection device 100 as said meter must be linked thereto so as to be able to carry out the corresponding measurements. It is therefore possible at all times to have the option of checking that the electromagnetic field compensator or multiple electromagnetic field compensator is operating correctly in order to guarantee the protection said compensator offers in its coverage radius.

The transformer 10 is preferably a toroidal current transformer. The toroidal current transformer has the advantage of not cutting the cable but rather crossing without touching said cable and is positioned inside the meter. Alternatively, other types of meters may also be envisaged. For example, open-core and closed-core toroidal transformers may be used, and the Hall effect may also be used for the measurements.

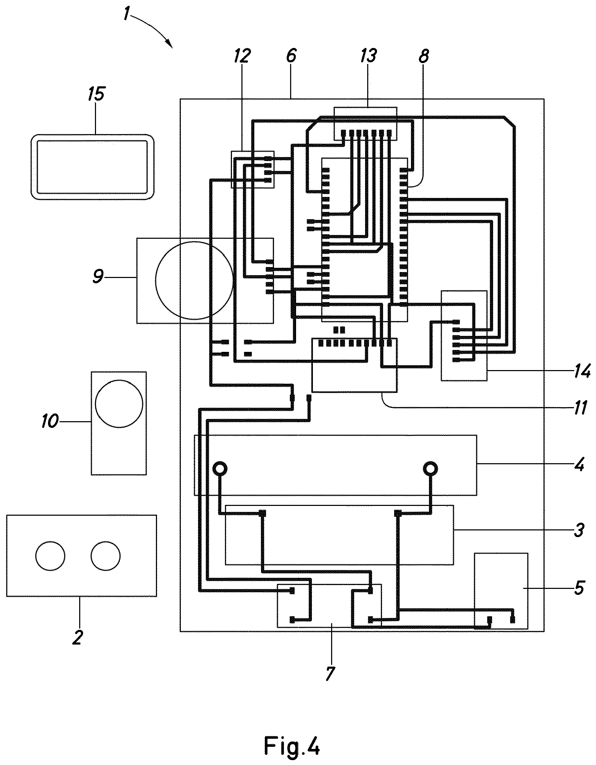

Fig. 4 shows diagrammatically the components of the intensity meter 1. The intensity meter 1 is positioned inside an exclusive outdoor panel or box. Said box or panel is completely hermetically sealed so that the electronic components that make the operation thereof possible do not suffer damage due to humidity or rain. Said electronic components are shown fixed to a connection board 6 for better organisation and ease of connection. The organisation, positioning and distribution of the components in Fig. 4 should be understood as an example of organisation, positioning and distribution, but other configurations and connections of said elements different from that shown are also possible, and the patent is not limited to a specific configuration.

The intensity meter 1 comprises an electric connection 2, preferably a 220-volt connection. In addition, the intensity meter 1 is shown connected to a power source 3 which supplies a battery 4 for the device. If the installation area suffers a power cut, the battery 4 will carry out the coverage process until the electricity service is restored. Similarly, the intensity meter 1 is shown connected to an alternative power supply source 5, such as wind turbines or photovoltaic panels, and the intensity meter 1 can be made autonomous if the site where said meter is to be installed does not have electric connectivity. The drainage intensity meter 1 will be operational at all times and in any climatological conditions as the operation thereof is not affected by the field or the amount of drainage, in other words, the equipment functions exclusively to demonstrate the operation of the lightning protector, and a sudden rise or fall in drainage cannot affect its operation as its power supply means is independent of the lightning conductor or lightning protector.

The intensity meter 1 comprises a regulator device 7 responsible for regulating the voltage as much as necessary for the operation of the electronic components used as a common source for the equipment, said voltage being from the various power supply sources that may be used, such as solar panels, AC and DC sources.

The intensity meter 1 also comprises means for transmitting data to a data display means. The diagram in Fig. 4 shows a programming and control device 8 which is responsible for executing the programming created and provides operating information to the other components; the same programming device 8 may also act as a control device for all the electronic equipment. Said programming and control device 8 transmits the data collected to the data display means.

The transformer 10 through the down conductor of the lightning conductor initiates readings in analogue mode. Said readings are received in a device 11 which transforms the data digitally. The intensity meter 1 also comprises a real time clock 9 which allows time measurements to be obtained in time units. Said data are sent remotely to the network and/or to a control station, for example.

The data compiled by the above-mentioned components will be displayed on a display element 15. Said display element 15 may be a screen, a monitor or a web page.

The present invention also discloses a diagnostic method for a lightning protection device measures the current intensity circulating through the grounding cable 20 and if the absolute intensity value is less than or greater than given threshold amounts, generates a maintenance alarm for the device.

There will be an alert call if the equipment shows an absolute drainage value of 0 with no fluctuation, which indicates that there is a fault and the lightning protection device 100 is not operating correctly, and a decision may be made to communicate the malfunction immediately for maintenance.

Moreover, other alarm signals may be generated if the absolute values are high and constant over time, which suggests a possible error in the dielectric which should be changed. In addition, if the absolute values are high but sporadic, this means that a storm is approaching. It should be noted that "absolute values" refer to determining the correct operation of the protector when the electric charge of the atmosphere or of the cumulonimbus clouds is both positive and negative.

The present invention also discloses a method for protecting equipment or infrastructure from lightning, by arranging a lightning protection device 100 in close proximity to the equipment or infrastructure to be protected, measuring the current intensity circulating through the grounding cable 20 and if the absolute value exceeds a given value, generating a protection alarm for the equipment or infrastructure.

Said data may be used to analyse said information in order to make decisions. For example, a fairly high current would indicate that atmospheric activity is high, at which moment an electric storm occurs and lightning forms in places where lightning protection devices are not installed. An operator could therefore take action to disconnect electric equipment that is not directly protected by the electromagnetic field compensation lightning conductor device, cover said equipment, etc., the meter thus allowing other equipment to be protected indirectly.

It should be emphasised that electric field compensation lightning protection devices 100 do not have a maximum drainage value, but rather depend on the variation in the energy of the electromagnetic field in the atmosphere in which said device may be allocated, the greater the drainage, the better. High values are indicated in such a way that the operator can easily corroborate the optimal operation of the equipment, by advising said operator that the upper limit has been exceeded. If a limit is exceeded, it is also possible to generate any type of alarm (visual, acoustic, message, etc.).

Said data may be collected and displayed in real time, or collected every so often. For example, the data may be collected over a period of 300 seconds and once that time has elapsed the data may be compiled in a cloud using a module 14 specially designed to record said data. Following this period of 300 seconds, the process starts again. It is important to stress that a screen display allows the leakage currents that descend through the cable 20 which connects the head to ground to be observed constantly in real time, using the data taken by the transformer 10. Alternatively, the data transmission means may transfer the data to a display screen every 300 seconds.

The screen 15 may be connected and receive data from the module 14 SD card and/or SIM card. Other types of connection are also possible, such as a Wi-Fi connection. The connectivity of the equipment 8 may also be via Wi-Fi and if said option is not available, via a SIM card. In one embodiment, the data will be visible on the display device 15 in numeric form, whereas on the web page the display will be numeric and graphic in accordance with the values recorded.

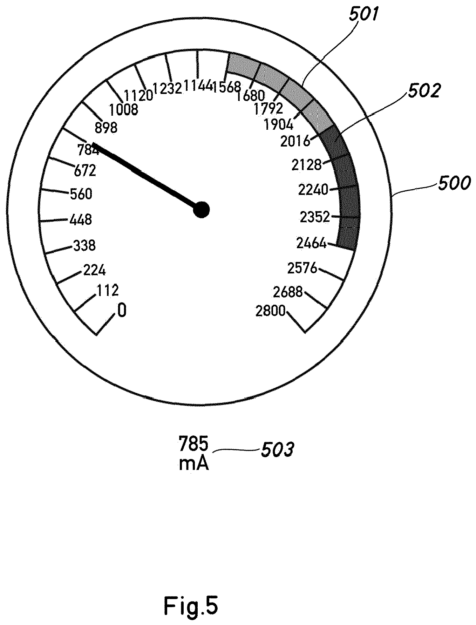

Fig. 5 is an example of a display using a graphic 500 of the leakage current data. Said display device 500 may be an example of a graphic illustration which could be seen via the monitor or screen 15, or may be transferred to a web page for display. In this illustrative embodiment, the graphic 500 comprises a needle which moves through a range of values indicating the measured value. Within the range, margins 501, 502 have been shown in colour as a visual reference for the operator of which values could be threshold values. For example, values of 1500 mA and 2000 mA could be considered threshold values, which would indicate that the current is excessive. Said values are lower than those that pass through a lightning conductor when lightning strikes. It is then up to the operator to decide whether or not to take action in the light of said values. For example, if the leakage currents exceed a threshold value, the operator may assess that the storm risk is imminent and therefore decide to disconnect other equipment that is not protected from electric discharges close to the equipment or installation protected by the compensator 100, cover other equipment, etc. It is thus possible to foresee the closeness of an electric discharge and effectively protect equipment that was not previously directly protected by a conventional or electromagnetic field capacitor lightning conductor. An illustrative scale could for example have a minimum of 0.01 mA and a maximum of 10 A. The measured value 503 is also displayed numerically on the screen or web page.

In addition, said meter allows the electromagnetic field in the protection area surrounding the electromagnetic field compensation lightning conductor to be verified instantaneously and information transmitted via the Internet or to a mobile telephone application in order to provide remote monitoring, allows historical data to be held and thus allows analysis of the behaviour of the electromagnetic field under different climatic conditions. Moreover, it is possible to check that the lightning conductor is operating correctly and can be monitored remotely without a technician having to go to the site and take readings.

Moreover, the intensity meter 1 may comprise a pressure and temperature sensor 12 capable of collecting data on the temperature, environmental humidity, atmospheric pressure and height above sea level, as well as a lightning detector 13 which allows information on a lightning strike and the intensity thereof to be collected (supplying data that, although not the object of the patent, are also useful for evaluating the equipment). It is therefore possible, using the conjunction of components with the circuit created and the programming produced, to collect and display data on a screen 15 or on a web page that includes the following:
- Drainage measurements for the lightning conductor device.
- Temperature.
- Environmental humidity.
- Atmospheric pressure.
- Height above sea level.
- Lightning strikes.
- Approximate intensity of the lightning that has impacted.

The equipment is therefore capable not only of measuring the amount of lightning, but also measuring the activity of the electric field, climatic conditions, drainage current, amount of lightning, approximate distance of the strike and relative intensity thereof. The main function is to measure the electric field (preferably in milliamperes) and said reading is taken at 5-minute intervals 24 hours a day.

It is also possible to use said lightning protection device 100 and the intensity meter 1 with lightning protection devices or lightning conductor installed at sea, using practically the same components as already described, with the addition of components that facilitate data transmission in order to provide communication and measurement reliability.

Although the invention has been described and illustrated based on illustrative examples, it should be understood that said example of an embodiment in no way limits the present invention, and therefore any variations that are included directly or by equivalence in the content of the accompanying claims should be considered to fall within the scope of the present invention.

## Claims

1. Lightning protection device, said device comprising an upper head made up of two electrodes separated by a dielectric, one of said electrodes being connected to ground via a grounding cable such that a potential difference may exist between the two electrodes, **characterised in that** said device also comprises a current intensity meter configured to measure the intensity circulating through the grounding cable.

2. Lightning protection device according to claim 1, **characterised in that** the current intensity meter is a current transformer in which one of the windings is formed by the grounding cable.

3. Lightning protection device according to claim 2, **characterised in that** the current transformer is a toroidal transformer.

4. Lightning protection device according to any one of the preceding claims, **characterised in that** it comprises data transmission means, the data transmission means being an SD card, a SIM card, Wi-Fi or Bluetooth connectivity.

5. Lightning protection device according to any one of the preceding claims, **characterised in that** it comprises data display means, the data display means comprising a screen, a mobile application or a web page.

6. Lightning protection device according to any one of the preceding claims, **characterised in that** the at least two electrodes are an upper electrode and a lower electrode, the at least one electrode referenced to ground being the lower electrode.

7. Lightning protection device according to any one of the preceding claims, **characterised in that** it comprises additional spherical electrodes, said spherical electrodes being connected to the lower electrode by a dielectric element.

8. Lightning protection device according to any one of the preceding claims, **characterised in that** it comprises an additional electrode, said additional electrode being a planar and/or ring-shaped electrode, said electrode being connected to a mast by a dielectric element.

9. Method for protecting equipment or infrastructure from lightning, which comprises the steps of:
a. Arranging a lightning protection device according to any one of the preceding claims in close proximity to the equipment or infrastructure to be protected.
b. Measuring the current intensity through the grounding cable.
c. If the absolute value measured exceeds a given value, generating a protection alarm for the equipment or infrastructure.

10. Method for protecting equipment or infrastructure according to claim 9, **characterised in that** the protection alarm for the equipment or infrastructure is generated if the absolute intensity value is greater than given values for a given period.

11. Diagnostic method for a device according to any one of claims 1 to 8, **characterised in that** it comprises the steps of:
a. Measuring the current intensity that circulates through the grounding cable.
b. If the absolute value is less than or greater than a given value, generating a maintenance alarm for the device.

12. Diagnostic method according to claim 11, **characterised in that** the maintenance alarm for the device is generated if the absolute intensity value is less than or greater than given values for a given period.

13. Diagnostic method according to either claim 11 or claim 12, **characterised in that** more than one type of alarm is generated, depending on whether the absolute intensity value is less than or greater than a given value.

## Amended claims

### Amended claims in accordance with Rule 137(2) EPC.

1. Diagnostic method for a lightning protection device (100), said device comprising an upper head made up of two electrodes (101, 102) separated by a dielectric (103), one of said electrodes being connected to ground via a grounding cable (20) such that a potential difference may exist between the two electrodes, said device also comprising a current intensity meter (1) configured to measure the intensity circulating through the grounding cable (20), **characterised in that** the method comprises the steps of:
a. Measuring the current intensity that circulates through the grounding cable (20).
b. if the absolute value is less than or greater than a given value, generating a maintenance alarm for the device (100)

2. Diagnostic method according to claim 1, **characterised in that** the maintenance alarm for the device (100) is generated if the absolute intensity value is less than or greater than given values for a given period.

3. Diagnostic method according to either claim 1 or claim 2, **characterised in that** more than one type of alarm is generated, depending on whether the absolute intensity value is less than or greater than a given value.

4. Diagnostic method, according to any of the previous claims, **characterised in that** the current intensity meter is a current transformer (10) in which one of the windings is formed by the grounding cable (20).

5. Diagnostic method, according to claim 4, **characterised in that** the current transformer (10) is a toroidal transformer.

6. Diagnostic method, according to any of the previous claims, **characterised in that** the device comprises data transmission means, the data transmission means being an SD card, a SIM card, Wi-Fi or Bluetooth connectivity.

7. Diagnostic method, according to any one of the preceding claims, **characterised in that** the device (100) comprises data display means, the data display means comprising a screen (15), a mobile application or a web page.

8. Diagnostic method, according to any one of the preceding claims, **characterised in that** the at least two electrodes (101, 102) of the device (100) are an upper electrode (101) and a lower electrode (102) , the at least one electrode referenced to earth being the lower electrode.
